# EUROPEAN PATENT APPLICATION

(11) **EP 3 932 210 A1**
(43) Date of publication of application: **05.01.2022**
(21) Application number: 21182753.0
(22) Date of filing: 30.06.2021
(51) Int. Cl.: A23G 9/08, A23G 9/12, A23G 9/22, A23G 9/28

(54) **CONFECTION APPARATUS**

(30) Priority: 30.06.2020 GB 202010030
(71) Applicant: Iconi Limited, London SW19 7PB (GB)
(72) Inventor: Meldrum, John, London, SW19 7PB (GB); Coppola, Giovanni Paulo, London, SW19 7PB (GB)
(74) Representative: Pure Ideas Limited

(57) **Abstract**

The present invention relates to a quadrilateral container with a cylindrical inner profile that has a containment plug and fits into a quadrilateral clamping cooling chamber, vertical paddles designed to fit into the inner cylindrical tube shaped container, to scrape and mix the frozen confectionary then and the use of a plunger with an interference fit on the container and paddles to dispense the frozen confectionary and cleans the chamber and paddles after removing the containment plug.

## Description

This specification relates to an apparatus for preparing frozen and/or cold confections on-demand. In particular, although not exclusively, this specification relates to a quadrilateral clamping cooling chamber, a quadrilateral container with a cylindrical inner profile, a containment plug, vertical paddles, and an extrusion plunger for preparing freshly-made frozen and/or cold confections on-demand. Further, it is a non-exclusive object of this specification to provide an apparatus which may prepare freshly made portions of frozen/cold confections on-demand faster and more efficiently compared with those typically available.

Examples of known cold confections include, but are not exclusive to, dairy and non-dairy ice creams, gelato, sorbets, sherbets, mousses, frozen yogurts, and slush or alcoholic or CBD infused beverages.

Currently available domestic ice cream makers produce quantities of ice cream ranging from 0.5 litres to 2 litres in scraped bowls and must be removed manually taking more time between servings and more time and effort to clean. Patent application WO/2010/149509/A1 relates to such portioned frozen confection system.

Embodiments of the invention seek to alleviate the associated problems with the prior art.

A first aspect of the invention provides an apparatus for making and dispensing a chilled or frozen confection, the apparatus comprising: a container, the container comprising: an inner receptacle for ingredients of the confection; a first opening sealed with a removable containment plug; and a second opening providing external access to the receptacle; a clamping cooling chamber configured to abut an exterior of the container and chill the ingredients; one or more paddles configured to be receivable in the receptacle and attachable to an actuator to mix the ingredients; and a plunger configured to plunge the confection from the container such that when the containment plug is removed from the container, the plunger dispenses the confection from the first opening.

The plunger may comprise apertures for the one or more paddles such that the plunger can move over the paddles when the paddles are received in the receptacle.

The plunger and one or more paddles may be engaged with an interference fit such that when the plunger moves over the paddles, the plunger removes the confection from the one or more paddles.

The one or more paddles may restrict the distance the plunger can plunge.

A diameter of the first opening may be smaller than a diameter of the second opening.

An exterior surface of the container and an interior surface of the clamping cooling chamber may be substantially the same shape.

An exterior surface of the container and an interior surface of the clamping cooling chamber may be both quadrilateral in shape.

The interior of the container, an outer circumference of the plunger and movement of the one or more paddles may be cylindrical.

The cooling chamber may be cooled using either conventional vapour compression or thermoelectric 'Peltier' cooling technology, or a combination of both.

The first opening may be at a bottom of the container.

The second opening may be at a top of the container.

The ingredients may be shelf-stable under ambient temperatures or be chilled before mixing.

The container may contain a pre-mix of all the ingredients required to make the confection.

The apparatus may dispense aerated volumes of confection from 50 ml to 300 ml.

The plunger and/or the one or more paddles may be removable from the container.

A second aspect of the invention may provide a method of making and dispensing a chilled or frozen confection, the method comprising: abutting a container including ingredients for making the chilled or frozen confection against a clamping cooling chamber, the container including a removable containment plug configured to seal a first opening of the container; inserting one or more paddles into a second opening of the container; inserting a plunger into the second opening of the container; rotating the paddles to mix the ingredients while chilling the ingredients; removing the containment plug from the container; and plunging the mixed and chilled ingredients from the second opening such that the confection is dispensed from the first opening of the container.

The method may further comprise removing confection from the one or more paddles while plunging.

The method may further comprise dispensing the confection directly from the first opening to a further container for consumption.

The method may further comprise removing the plunger from the container, then removing the paddles from the container.

Embodiments of the apparatus are described, by way of example, with reference to the accompanying drawings, in which:
Figure 1 shows components of an apparatus;
Figure 2 shows interconnectivity of apparatus components;
Figure 3 shows a clamping cooling chamber abutting a container;
Figure 4 shows a clamping cooling chamber abutting a container;
Figure 5 shows a container schematic;
Figure 6 shows paddle movement within the container; and
Figure 7 shows a plunger as it moves through the container to dispense a frozen or cold confection.

The present invention improves upon the prior art by providing a means to prepare freshly made frozen/cold confection with a cooling container with an outside quadrilateral profile and a cylindrical inner profile designed to fit inside a clamping cooling chamber and utilising a rotating scraper unit in the form of vertical paddles that is inserted into the container and in conjunction with a plunger unit to dispense the frozen confection. The paddles and plunger are then removed from the container once the frozen/cold confection has been dispensed.

The present invention specifically improves upon application WO/2010/149509/A1 by:
a) employing a quadrilateral-to-quadrilateral fit and so requires the need to loosen and tighten the cooling chamber on insertion of the quadrilateral container; and
b) employing vertical paddles that scrape and mixes the product when rotated and a plunger with an interference fit to the inner profile of the container and the paddles that then extrudes the product and cleans the paddles and container.

In the present invention a quadrilateral shaped container is designed to fit inside a purposely designed clamping cooling chamber to cool the contents within the cylindrical inner profile of the container.

The quadrilateral container packaging will hold the contents and ingredients necessary to prepare the required frozen/cold confection on demand.

The quadrilateral container will have a sealable opening at the top to allow insertion of the vertical paddles and scraper unit and a removable container plug at the bottom to allow dispense of the frozen/cold confection.

The vertical paddles unit is designed to move through the through container in a rotation movement scraping the frozen confection off the chamber walls and forcing it centrally into the mix therefore dispersing the ice crystals formed on the chamber wall.

The vertical paddles have a square or rectangular cross section. This is to create a leading edge that will scrape the frozen confection off the walls of the cylindrical container while then forcing the ice crystals back through the mix.

The vertical paddle unit comprises a connection mechanism that allows it to connect to an external drive unit to rotate the paddles in a rotary motion and a connection to a linear drive mechanism to engage with the plunger.

The features and embodiments of the present invention are explained and shown in the figures and drawings enclosed.

The present invention relates to a cooling container with an outside square or rectangular (quadrilateral) profile and a cylindrical inner profile (b) that has a containment plug (d) and fits into a clamping cooling chamber (a), vertical paddles attached to a dispensing nozzle(c) designed to fit into the cylindrical container, and a plunger (e) designed to fit into the cooling container where the paddles (c) scrape and mix the frozen confectionary then the plunger is activated to dispense the frozen confectionary after removing the containment plug,(d). The plunger (d) is designed to have an interference fit with both the inner profile of the cooling container (b) and the vertical paddles (c) by means of a wiper seal to remove all the frozen confectionary from the container and paddles. The present invention improves upon the prior art by providing a means to prepare freshly made frozen/cold convection with quadrilateral shaped container with an inner cylindrical profile (b) designed to fit inside a clamping cooling chamber (a) and utilising a rotation that scrapes and mixes the liquid being frozen by means of the two vertical blades attached to a dispensing nozzle and then activating a plunger designed to fit the inner cylindrical profile of the cooling container (b) to dispense the frozen confection.

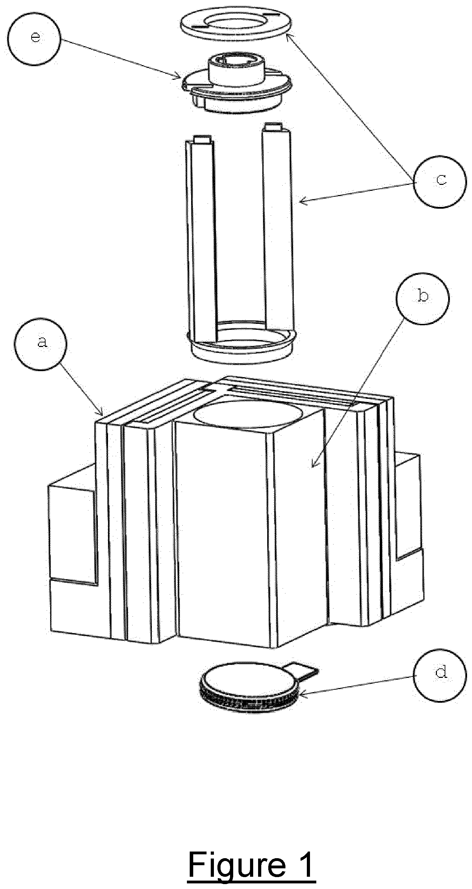

This invention relates to the objective of preparing portioned frozen confections utilizing reusable, recyclable and/or disposable container. The invention makes it possible prepare freshly made portions of frozen/cold confections on-demand in a much shorter period of time compared to domestically available ice cream makers. Referring firstly to Figure 1, the present invention relates to the fast and on-demand preparation of freshly made and portioned frozen/cold edible confections (dairy and non-dairy ice creams, gelato, sorbets, sherbets, mousses, frozen yogurts, and slush beverages) utilizing reusable, recyclable and/or disposable packaging units. With reference to Figure 1, the invention relates to the combination of (a) a container clamping cooling chamber, (b) a quadrilateral container, (c) vertical paddles attached to a dispense nozzle, (d) a removable container plug that allows for the efficient dispensing of contents from inside a cylindrical space, and (e) a plunger for dispensing of contents.

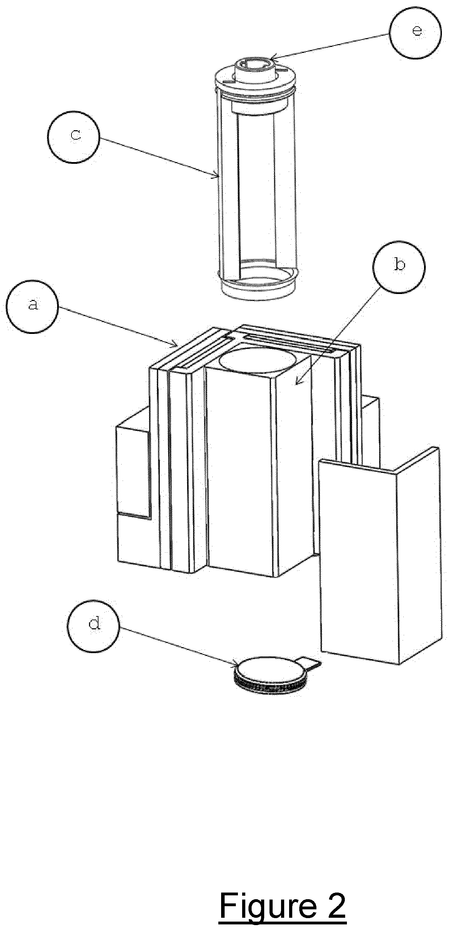

Figures 1 and 2 show how a quadrilateral container is inserted into the quadrilateral clamping cooling chamber. The external plunger and scraper unit is inserted into the container. A rotational mechanical drive is applied to the vertical paddles that act as both a scraping and mixing unit as the chamber cools the contents of the container. The scraping unit scrapes, mixes and aerates the ingredients within the container during cooling when the vertical paddles are rotated. When the confection is ready, the bottom container plug is removed and the plunger unit is engaged to dispense out the frozen/cold confection, ready for consumption. The empty and used container and vertical paddles are removed and cleaned.

To be ready to receive the next container, the cooling chamber can undergo a defrosting stage to eliminate any ice crystal build-up on the surface of the internal walls of the quadrilateral profile.

### a) The Clamping Cooling Chamber

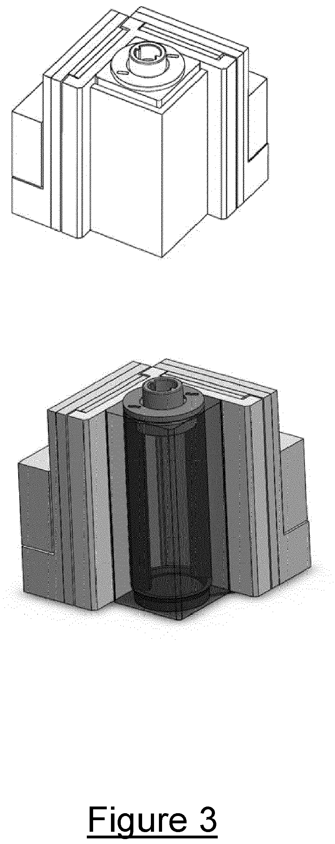

A quadrilateral shaped cooling chamber (shown in Fig. 3, for example), is designed with dimensions to hold a quadrilateral shaped container. The cooling chamber is effectively a refrigeration unit using either conventional vapour compression or thermoelectric 'Peltier' technology or both.

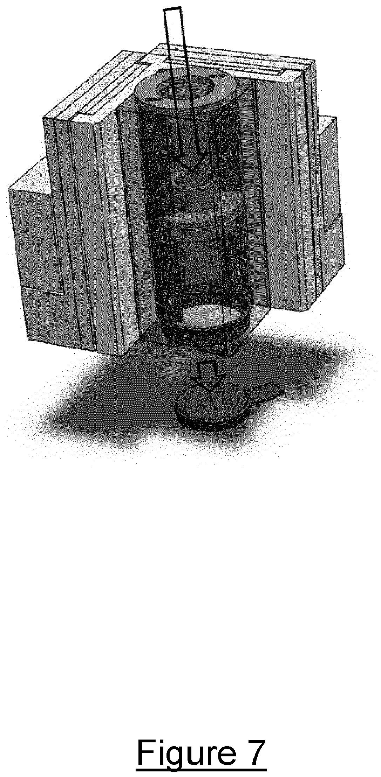

Fig. 7 shows the movement of the plunger to extrude the frozen convection.

During the defrosting stage, a reversed compressor gas flow valve can be used in the case of vapour compression refrigeration or reversing the electrical current (DC, direct current) polarity in the case of thermoelectric 'Peltier'. This allows for the internal surface of the cylindrical cooling chamber to increase in temperature (heating instead of cooling) very quickly to the point at which any ice crystals will melt and liquefy and/or evaporate.

### b) The quadrilateral Container

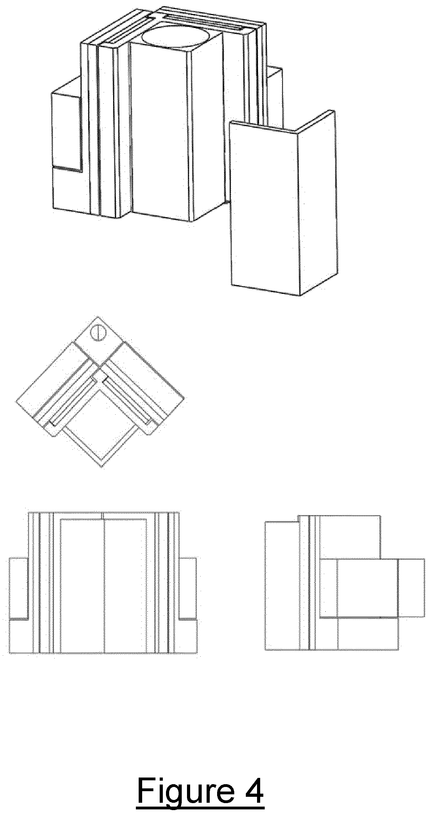

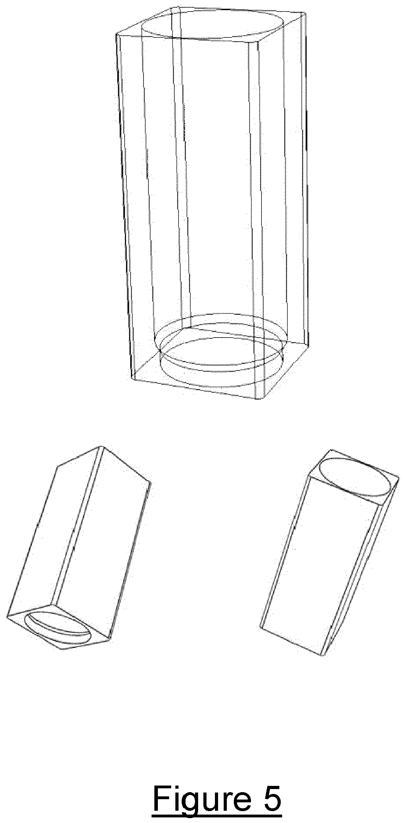

Figure 5 shows the quadrilateral container. The quadrilateral container is designed with dimensions to fit and be clamped into the quadrilateral cooling chamber (Fig. 3 and Fig 4). The quadrilateral container is pre-dosed containing all the ingredients necessary to make a frozen/cold confection. The ingredients are preferably chilled or shelf-stable and include a gaseous phase e.g. air, in the container headspace. The volume ratio of liquid & solid ingredients versus gas can vary between 10% and 50% with the preferred ratio to be 20% depending on the type and texture of frozen convention required.

The container packaging has a removable plug seal at the bottom (Figure 2). The top seal is provided by the plunger and is removable so that the paddle and plunger assembly can be inserted into the cylindrical container. The bottom plug seal is removed to reveal a dispensing hole/orifice attached to the paddles of desired shape from which the frozen/cold confection can be dispensed when ready.

### c) The vertical paddles

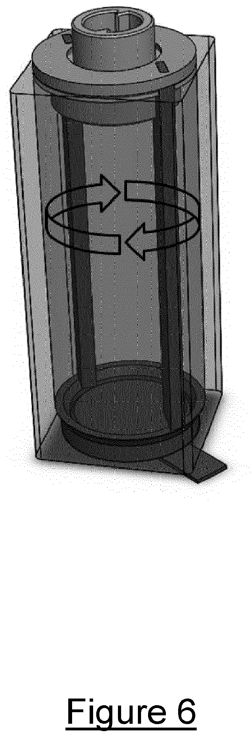

Figure 6 shows the vertical paddle and plunger unit designed to be able to mix and dispense from the cylindrical inner profile of the container. The vertical paddles initially and throughout the frozen/cold confection cooling stage, sits in the cylindrical inner profile of the container. When the frozen/cold confection is ready, the vertical paddle rotation stops and the plunger is engaged (Fig. 7, for example) to dispense the frozen/cold confection through the nozzle attached to the paddles.

While the invention has been illustrated and described in detail in the drawings and preceding description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. Each feature of the disclosed embodiments may be replaced by alternative features serving the same, equivalent or similar purpose, unless stated otherwise. Therefore, unless stated otherwise, each feature disclosed is one example of a generic series of equivalent or similar features.

In the claims, the word "comprising" does not exclude other elements or steps, and the indefinite article "a" or "an" does not exclude a plurality. Any reference signs in the claims should not be construed as limiting the scope.

## Claims

1. An apparatus for making and dispensing a chilled or frozen confection, the apparatus comprising:
a container, the container comprising:
an inner receptacle for ingredients of the confection;
a first opening sealed with a removable containment plug; and
a second opening providing external access to the receptacle;
a clamping cooling chamber configured to abut an exterior of the container and chill the ingredients;
one or more paddles configured to be receivable in the receptacle and attachable to an actuator to mix the ingredients; and
a plunger configured to plunge the confection from the container such that when the containment plug is removed from the container, the plunger dispenses the confection from the first opening.

2. The apparatus of claim 1, wherein the plunger comprises apertures for the one or more paddles such that the plunger can move over the paddles when the paddles are received in the receptacle.

3. The apparatus of claim 2, wherein the plunger and one or more paddles are engaged with an interference fit such that when the plunger moves over the paddles, the plunger removes the confection from the one or more paddles.

4. The apparatus of claim 1, 2 or 3, wherein the one or more paddles restrict the distance the plunger can plunge.

5. The apparatus of any preceding claim, wherein a diameter of the first opening is smaller than a diameter of the second opening.

6. The apparatus of any preceding claim, wherein an exterior surface of the container and an interior surface of the clamping cooling chamber are substantially the same shape.

7. The apparatus of any preceding claim, wherein an exterior surface of the container and an interior surface of the clamping cooling chamber are both quadrilateral in shape.

8. The apparatus of any preceding claim, wherein the interior of the container, an outer circumference of the plunger and movement of the one or more paddles are cylindrical.

9. The apparatus of any preceding claim, wherein the cooling chamber is cooled using either conventional vapour compression or thermoelectric 'Peltier' cooling technology, or a combination of both.

10. The apparatus of any preceding claim, wherein the first opening is at a bottom of the container, and preferably wherein the second opening is at a top of the container.

11. The apparatus of any preceding claim, wherein the ingredients are shelf-stable under ambient temperatures or are chilled before mixing, and preferably wherein the container contains a pre-mix of all the ingredients required to make the confection.

12. The apparatus of any preceding claim, wherein the apparatus dispenses aerated volumes of confection from 50 ml to 300 ml.

13. The apparatus of any preceding claim, wherein the plunger and/or the one or more paddles are removable from the container.

14. A method of making and dispensing a chilled or frozen confection, the method comprising:
abutting a container including ingredients for making the chilled or frozen confection against a clamping cooling chamber, the container including a removable containment plug configured to seal a first opening of the container;
inserting one or more paddles into a second opening of the container;
inserting a plunger into the second opening of the container;
rotating the paddles to mix the ingredients while chilling the ingredients;
removing the containment plug from the container; and
plunging the mixed and chilled ingredients from the second opening such that the confection is dispensed from the first opening of the container.

15. The method of claim 14, further including removing confection from the one or more paddles while plunging, preferably further comprising dispensing the confection directly from the first opening to a further container for consumption, and preferably further including removing the plunger from the container, then removing the paddles from the container.
